# EUROPÄISCHE PATENTANMELDUNG

(11) **EP 0 844 135 A2**
(43) Veröffentlichungstag der Anmeldung: **27.05.1998**
(21) Anmeldenummer: 97118309.0
(22) Anmeldetag: 22.10.1997
(51) Int. Cl.: B60P 3/36, B60P 3/38

(54) **Wohnmobil, Motorhome od.dhl.**

(30) Priorität: 22.11.1996 DE 29620320 U
(71) Anmelder: Knaus Caravan GmbH, 94118 Jandelsbrunn (DE)
(72) Erfinder: Cürten, Franz J., 89079 Ulm (DE); Nusser, Alois, 94118 Jandelsbrunn (DE)
(74) Vertreter: Matschkur, Lindner Blaumeier Patent- und Rechtsanwälte

(57) **Zusammenfassung**

Wohnmobil, Motorhome od.dgl. mit einem von einer seitlich oder nach oben weggeschwenkten Nichtgebrauchsstellung über die Vordersitze schwenkbaren Hubbett und mit einer hinter einem der Vordersitze, vorzugsweise dem drehbaren Beifahrersitz, aus einer versenkten Ruhestellung unter dem Sitz ausziehbaren Aufstiegshilfe.

## Beschreibung

Die Erfindung bezieht sich auf ein Wohnmobil, Motorhome od.dgl., mit einem von einer seitlich oder nach oben wegschwenkbaren Nichtgebrauchsstellung über die Vordersitze schwenkbaren Hubbett.

Bei solchen Wohnmobilen bedarf es zusätzlicher Hilfsmittel, um ein derartiges hochgelegenes Hubbett sicher besteigen zu können. Im allgemeinen sind hierzu Leitern vorgesehen, wobei neben fest am Bett angebrachten Leitern auch abnehmbare Leitern im Gebrauch sind, die dann einen besonderen Stauraum im Wohnwageninnern erforderlich machen.

Der Erfindung liegt daher die Aufgabe zugrunde, ein Wohnmobil der eingangs genannten Art so auszugestalten, daß das Besteigen eines Hubbetts erleichtert wird, ohne daß störend in den Raum ragende oder umständlich an getrenntem Ort unterbringbare Teile benötigt werden.

Zur Lösung dieser Aufgabe ist ein Wohnmobil erfindungsgemäß gekennzeichnet durch eine hinter einem der Vordersitze, vorzugsweise dem drehbaren Beifahrersitz, aus einer versenkten Ruhestellung unter dem Sitz ausziehbare Aufstiegshilfe, wobei die Aufstiegshilfe in Ausgestaltung der Erfindung eine an einem Trägerteil aus seitlich unter dem Sitz in Führungen einschiebbaren Längsträgern und einer abgewinkelten Bodenabstützung befestigte Trittplatte umfassen kann.

Eine solche unter den Sitz einschiebbare Aufstiegshilfe mit einer oder mehreren Trittplatten bildet somit eine Art Leiter zum Besteigen des Hubbetts und läßt sich gleichwohl problemlos und ohne daß ein zusätzlicher Raum im Innern des Wohnmobils benötigt wird, wieder verstauen.

Ein besonders einfacher Aufbau ergibt sich dabei gemäß einem weiteren Merkmal der vorliegenden Erfindung dadurch, daß die Längsstreben durch einen abgewinkelten, die Bodenabstützung bildenden U-Bügel einstückig miteinander verbunden sind. Das eigentliche Trägerteil läßt sich somit einstückig aus einem Metallrohr biegen, was sowohl einen stabilen als auch einen billig und einfach herstellbaren Aufbau ergibt.

Mit besonderem Vorteil kann die Trittplatte an, an den Längsträgern schwenkbar angelenkten, L-Winkeln befestigt sein, so daß sie einerseits vor die Bodenabstützung schwenkbar und andererseits durch Stützstreben in der horizontalen Ausschwenkstellung gegenüber dem Trägerteil abstrebbar ist. Diese Ausbildung hat den Vorteil, daß die Höhe der Trittplatte in der hochgeschwenkten und verstrebten Gebrauchsposition höher ist als die Höhe des Trägerteils, die ja ihrerseits wiederum dadurch begrenzt ist, daß das Trägerteil unter den Sitz einschiebbar sein soll. Die quasi zweiteilige Ausbildung der Aufstiegshilfe aus einem niedrigen Trägerteil und einer über dieses nach oben hochschwenkbaren Trittplatte ermöglicht eine Konstruktion, bei der auch kleinere Benutzer problemlos in ein Hubbett unter Benutzung dieser Aufstiegshilfe steigen können.

Dabei liegt es weiter im Rahmen der Erfindung, im Kniebereich zwischen den Längsstreben und den Schenkeln des U-Bügels einen nach oben offenen Abstützwinkel für die Strützstreben der Trittplatte zu befestigen, wobei die Stützstrebe ihrerseits ein unter die Trittplatte arretierbar einschwenkbarer U-Bügel sein kann. Diese Ausbildung ist sowohl einfach im Aufbau und damit leicht herstellbar als auch einfach und sicher in der Benutzung.

Eine im gleichen Sinne einer optimalen Raumausnützung des doch sehr beschränkten Innenraum eines Wohnmobils, Motorhomes od.dgl. dient eine weitere Ausgestaltung der Erfindung, nach der in einem Wohnmobil mit einer um einen Tisch gruppierten Sitzgruppe hinter den Vordersitzen - wobei üblicherweise die Vordersitze durch Drehen ebenfalls in diese Sitzgruppe mit einbezogen werden können - der Tisch erfindungsgemäß ein Einsäulen-Gestell besitzt, an dem die exzentrisch über dem Gestell angeordnete Tischplatte um die vertikale Säulenachse drehbar und in unterschiedlichen Drehstellungen arretierbar gelagert ist. Durch diese Ausbildung kann - unabhängig davon, ob es sich um eine runde oder eckige Tischplatte handelt - eine optimale Anpassung der Orientierung der Tischplatte zu den einzelnen Sitzen der Sitzgruppe erreicht werden, je nachdem ob alle Sitze besetzt werden sollen oder welche Sitze von einer kleineren Gruppe von Benutzern ausgewählt werden.

Mit Vorteil kann das Einsäulen-Gestell von innen heizbar sein, beispielsweise in der Weise, daß in das hohle Einsäulen-Gestell über eine Leitung Warmluft einspeisbar ist, die durch seitliche Öffnungen austreten kann. Alternativ könnte auch vorgesehen sein, daß in das hohle, vorzugsweise aus Metall bestehende Einsäulen-Gestell eine elektrisch oder mit Warmwasser betriebene Heizspirale eingebaut ist. Die elektrischen Kabel oder die Warmluft- bzw. Warmwasserleitungen können bevorzugt im hohlen Boden des Wohnwagens unsichtbar verlegt sein.

Schließlich liegt es auch noch im Rahmen der Erfindung, ein Schränkchen neben dem Beifahrersitz vorzusehen, aus dem nach hinten in den Bereich einer Seitentür des Aufbaus eine Aufbaubatterie herausziehbar ist, wobei die Batterie bevorzugt auf einem Schiebeschlitten angeordnet ist. Diese Ausbildung ermöglicht ein extrem einfaches Wechseln der Batterie durch Herausziehen in den Türbereich, wo sie einfach nach außen befördert werden kann und es bedarf keines umständlichen Schleifens der Batterie durch die beengten Wohnmobilgänge, wie dies bei bekannten Ausgestaltungen noch notwendig war.

Weitere Vorteile, Merkmale und Einzelheiten der Erfindung ergeben sich aus der nachfolgenden Beschreibung einiger Ausführungsbeispiele sowie anhand der Zeichnung. Dabei zeigen:
- Fig. 1: eine schematische Seitenansicht des umgedrehten Beifahrersitzes mit darüber angedeutetem Hubbett und einer herausziehbaren Aufstiegshilfe in Nichtgebrauchsstellung und strichpunktiert in der Gebrauchsstellung,
- Fig. 2: eine perspektivische Teilansicht der in Gebrauchsstellung ausgezogenen und hochgeschwenkten Aufstiegshilfe gemäß Fig. 1,
- Fig. 3: eine Obenansicht des Innenraums eines Wohnmobils mit einer erfindungsgemäß exzentrisch gelagerten und drehbaren Tischplatte in einer ersten und
- Fig. 4: in einer zweiten Drehstellung,
- Fig. 5: einen Teilschnitt durch den Tisch und das als trompetenförmige Säule ausgebildete Gestell,
- Fig. 6: eine perspektiivische Ansicht schräg von oben des seitlichen Türbereichs neben der Beifahrertür mit einem Schränkchen zum Einschieben und Herausziehen einer Aufbaubatterie,
- Fig. 7: einen Teilschnitt durch den Tisch und den Fußboden mit einer gegenüber Fig. 5 abgewandelten Heizvorrichtung, und
- Fig. 8: einen Schnitt längs der Linie VIII-VIII in Fig. 7.

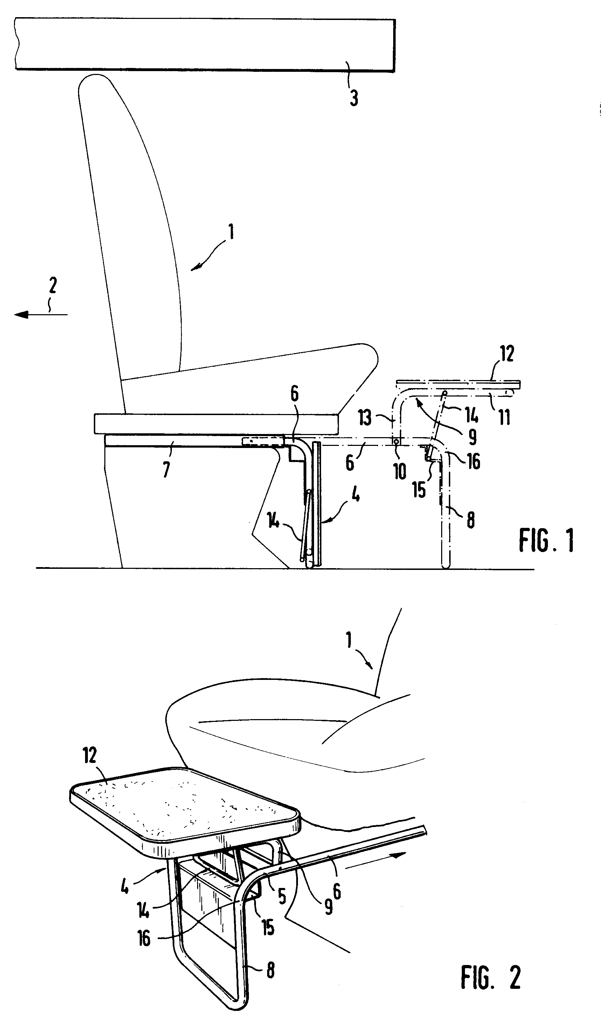

Der in den Figuren 1 und 2 erkennbare Beifahrersitz 1 - die Fahrtrichtung des Fahrzeugs entspricht der Pfeilrichtung des Pfeils 2 - ist in der gedrehten in den Innenraum des Fahrzeugs nach hinten weisenden Wohnraumnutzungsposition dargestellt, in der ein nur schematisch und ohne die Schwenkaufhängeeinrichtungen gezeigtes Hubbett 3 über die Vordersitze geklappt ist. Zum Besteigen dieses Hubbettes dient erfindungsgemäß eine Aufstiegshilfe 4, die aus einer in Fig. 1 ausgezogen dargestellten Nichtgebrauchsstellung unter dem Fahrer- oder Beifahrersitz 1 in eine in Fig. 1 strichpunktiert gezeigte und in Fig. 2 perspektivisch nochmals dargestellte Gebrauchsposition herausgezogen werden kann.

Die Aufstiegshilfe 4 besteht aus einem Trägerteil 5 mit zwei zueinander parallelen seitlichen Längsstreben 6, die in Führungen 7 seitlich unter dem Sitz 1 einschiebbar und herausziehbar sind, sowie einem abgewinkelten U-Bügel 8, die einstückig miteinander verbunden sind. Wie man insbesondere aus Fig. 2 erkennen kann, können die Längsträger 6 und der U-Bügel 8 sehr einfach als einstückiges Biegeteil aus einem Metallrohr ausgebildet sein. An den Längsträgern 6 sind L-Winkel 9 bei 10 schwenkgelagert, wobei die beiden L-Winkel 9 auf den beiden Seiten ggf. wiederum einstückig durch einen sie verbindenden, in den Figuren nicht erkennbaren Schenke miteinander verbunden sein können. Auf dem freien Schenkel 11 der L-Winkel 9 ist eine Trittplatte 12 befestigt. Die kurzen Schenkel 13 der L-Winkel, die an den Längsträgern 6 angelenkt sind, weisen eine solche Länge auf, daß in der eingeschwenkten Stellung (ausgezogen in Fig. 1 dargestellt) die Trittplatte unmittelbar vor dem als Bodenabstützung dienenden U-Bügel 8 liegt. In der hochgeschwenkten Betriebsstellung stützt sich die Trittplatte 12 über als U-Bügel 14 ausgebildete Stützstreben auf einem Abstützwinkel 15 ab, der im Bereich des Knies 16 zwischen den Längsträgern 6 und dem die Bodenabstützung bildenden U-Bügel 8 am Trägerteil 4 befestigt ist.

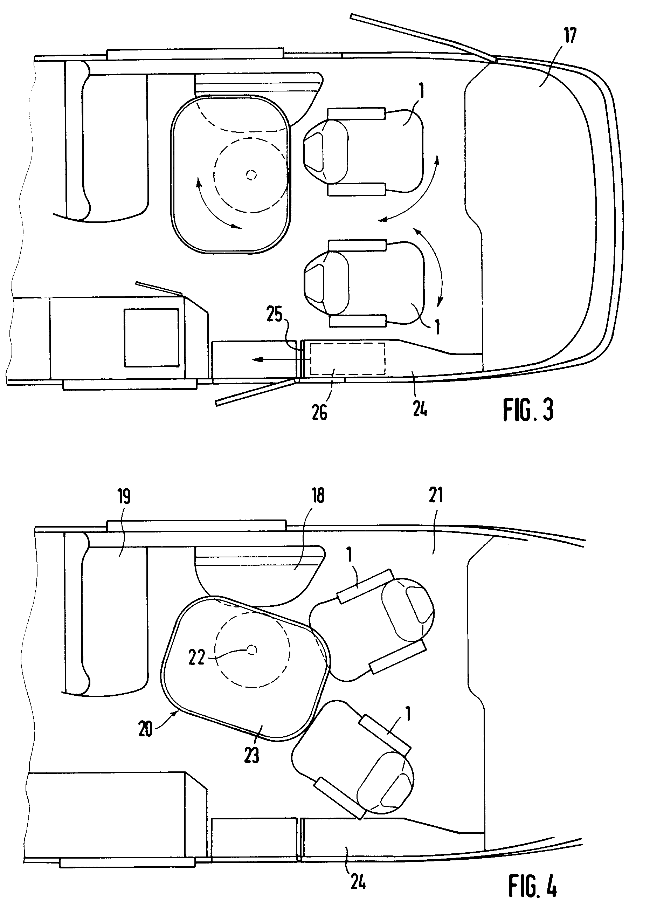

In den Figuren 3 und 4 ist der Innenaufbau des Sitzteils des Wohnmobils schematisch dargestellt, wobei neben den beiden Vordersitzen 1, die in an sich bekannter Weise drehbar ausgebildet sind, so daß die Sitzposition nicht nur nach vorne zur Windschutzscheibe 17 gerichtet ist, sondern auch nach rückwärts und teilweise sogar schräg nach hinten weisen kann, wie dies in Fig. 4 zu erkennen ist, eine weitere Sitzgruppe vorhanden, die im dargestellten Ausführungsbeispiel aus einem Einzelsitz 18 und einer Sitzbank 19 besteht. Im Raum zwischen all diesen Sitzen 1, 18 und 19 ist ein Tisch 20 am Boden 21 befestigt, der aus einem im einzelnen nicht dargestellten Einsäulen-Gestell 22 und einer exzentrisch darauf drehbar gelagerten Tischplatte 23 besteht. Die drehbare Tischplatte soll dabei in unterschiedlichen Drehpositionen arretierbar sein. Der Vergleich der Figuren 3 und 4 läßt erkennen, wie man durch Lösen der Arretierung und Verdrehen der Tischplatte den Tisch in unterschiedlicher Weise an die Benutzungsanforderung bei der unterschiedlichen Besetzung der verschiedenen Sitze anpassen kann. Die Arretierung in der jeweils neu eingestellten Drehposition ist notwendig, damit sich der Tisch nicht aus dieser Position wieder wegdrehen kann, wenn man an ihm anstößt, so daß das Geschirr nicht herunterfallen kann.

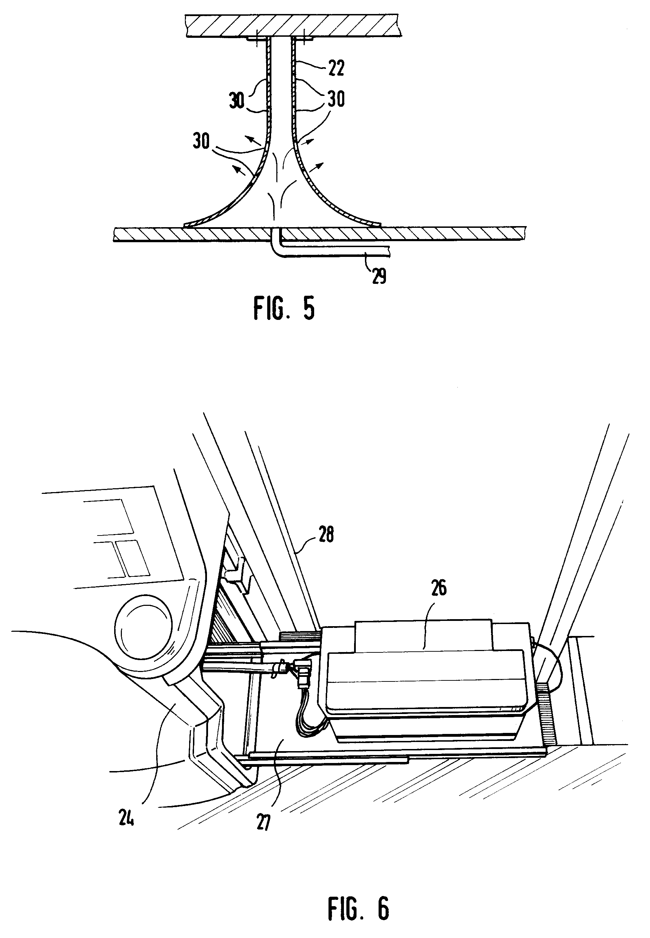

Die Fig. 5 zeigt eine Anordnung für eine Zusatzheizung unter Verwendung des hohlen Tischgestells, in das von unten über eine Leitung 29, die zum Motorraum führt, Warmluft eingeblasen wird, die durch seitliche Öffnungen 30 austritt.

Seitlich neben dem Beifahrersitz ist ein Schränkchen 24 mit einer hinteren nach oben oder zur Seite aufschwenkbaren Tür 25 eingebaut, das zur Aufnahme einer Aufbaubatterie 26 dient. Die Aufbaubatterie ist dabei auf einem Schiebeschlitten 27 angeordnet, der ein leichtes Herausziehen aus dem Schränkchen 24 ermöglicht, um die Aufbaubatterie 26 in den Öffnungsbereich 28 einer Seitentür des Wohnmobils hinter dem Beifahrersitz zu bringen und auf diese Art und Weise die Batterie einfach zum Wechseln herausnehmen oder auch wieder einsetzen zu können.

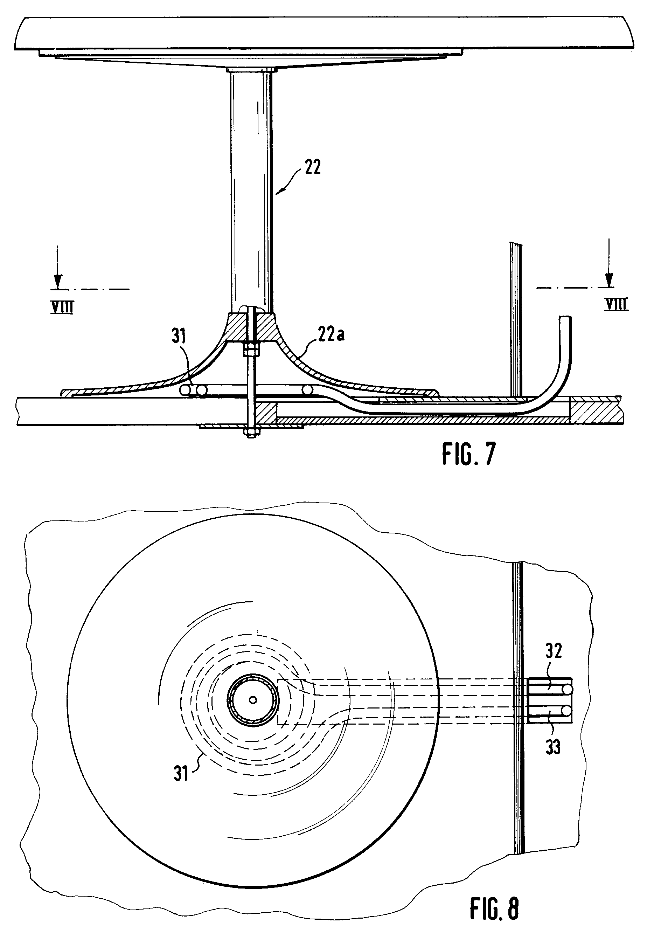

Die Figuren 7 und 8 zeigen eine gegenüber Fig. 5 abgewandelte beheizbare Tischkonstruktion. Dabei ist lediglich der Fußbereich 22a des Einsäulen-Gestells 22 hohl ausgebildet, jedoch ohne die Warmluftaustrittsöffnungen 30 der Anordnung nach Fig. 5. Statt dessen ist in den hohen Fußbereich 22a eine Heizspirale 31 eingebaut, die über eine Vorlaufleitung 32 und eine Rücklaufleitung 33 mit Warmwasser gespeist wird. Auf diese Art und Weise wird der Fußbereich des Einsäulen-Gestells spezeill geheizt, so daß man auf diesen geheizten Fußbereich die Füße aufstellen kann.

## Patentansprüche

1. Wohnmobil, Motorhome od.dgl. mit einem von einer seitlich oder nach oben weggeschwenkten Nichtgebrauchsstellung über die Vordersitze schwenkbaren Hubbett, gekennzeichnet durch eine hinter einem der Vordersitze, vorzugsweise dem drehbaren Beifahrersitz (1), aus einer versenkten Ruhestellung unter dem Sitz ausziehbare Aufstiegshilfe (4).

2. Wohnmobil nach Anspruch 2, dadurch gekennzeichnet, daß die Aufstiegshilfe (4) eine an einem Trägerteil (5) aus seitlichen, unter den Sitz (1) in Führungen (7) einschiebbaren Längsträgern (6) und einer abgewinkelten Bodenabstützung befestigte Trittplatte (12) umfaßt.

3. Wohnmobil nach Anspruch 1 oder 2, dadurch gekennzeichnet, daß die Längsstreben (6) durch einen abgewinkelten, die Bodenabstützung bildenden, U-Bügel (8) einstückig miteinander verbunden sind.

4. Wohnmobil nach Anspruch 2 oder 3, dadurch gekennzeichnet, daß die Trittplatte (12) an, an den Längsträgern (6) schwenkbar angelenkten L-Winkeln (9) derart befestigt ist, daß sie vor die Bodenabstützung schwenkbar und durch Stützstreben in der horizontalen Ausschwenkstellung gegenüber dem Trägerteil (5) abstrebbar ist.

5. Wohnmobil nach Anspruch 4, dadurch gekennzeichnet, daß im Bereich des Knies (16) zwischen den Längsträgern (6) und den Schenkeln des U-Bügels (8) ein nach oben offener Abstützwinkel (15) für die Stützstreben der Trittplatte (12) befestigt ist.

6. Wohnmobil nach Anspruch 4 oder 5, dadurch gekennzeichnet, daß die Stützstrebe ein unter die Trittplatte (12) arretierbar einschwenkbarer U-Bügel (14) ist.

7. Wohnmobil mit einer um einen Tisch gruppierten Sitzgruppe hinter den Vordersitzen, insbesondere nach einem der Ansprüche 1 bis 6, dadurch gekennzeichnet, daß der Tisch (20) ein Einsäulen-Gestell (22) besitzt, an dem die exzentrisch über dem Einsäulen-Gestell (22) angeordnete Tischplatte (23) um die vertikale Säulenachse drehbar und in unterschiedlichen Drehstellungen arretierbar gelagert ist.

8. Wohnmobil nach Anspruch 7, dadurch gekennzeichnet, daß das hohle Einsäulen-Gestell (22) von innen heizbar ist.

9. Wohnmobil nach Anspruch 8, dadurch gekennzeichnet, daß in das hohle Einsäulen-Gestell (22) über eine Leitung (29) Warmluft einspeisbar ist, die durch seitliche Öffnungen (30) austreten kann.

10. Wohnmobil nach Anspruch 8, dadurch gekennzeichnet, daß in das zumindest im hohlen Fußbereich aus Metall bestehende Einsäulen-Gestell (22) eine elektrisch oder mit Warmwasser betriebene Heizspirale (31) eingebaut ist.

11. Wohnmobil insbesondere nach einem der Ansprüche 1 bis 10, gekennzeichnet durch ein Schränkchen (24) neben dem Beifahrersitz (1), aus dem nach hinten in den Bereich einer Seitentür (25) eine Aufbaubatterie (26) herausziehbar ist.

12. Wohnmobil nach Anspruch 11, dadurch gekennzeichnet, daß die Aufbaubatterie (26) auf einem Schiebeschlitten (27) angeordnet ist.
